# EUROPEAN PATENT SPECIFICATION

(11) **EP 3 559 448 B1**
(45) Date of publication and mention of the grant of the patent: **06.07.2022**
(21) Application number: 17832993.4
(22) Date of filing: 20.12.2017
(51) Int. Cl.: F03D 7/04, F03D 17/00, F03D 7/02

(54) **WIND TURBINE FARM LEVEL LOADS MANAGEMENT CONTROL**
LASTENVERWALTUNGSSTEUERUNG AUF WINDTURBINENPARKEBENE
COMMANDE DE GESTION DE NIVEAU DE CHARGES DANS UN PARC ÉOLIEN

(30) Priority: 21.12.2016 GB 201621916
(43) Date of publication of application: 30.10.2019
(73) Proprietor: Romax Technology Limited, Cobham KT11 1HY (GB)
(72) Inventor: BROWN, Stephen, Bath Avon BA1 7RW (GB); DAY, James, Nottingham Nottinghamshire NG7 2TU (GB); POON, Andy, Nottingham, Nottinghamshire NG7 2TU (GB)
(74) Representative: Kaminski Harmann
(86) International application number: PCT/IB2017/058230
(87) International publication number: WO 2018/116218

(56) References cited:
- EP-A2- 2 169 218
- EP-A2- 2 667 022
- DE-A1-102010 063 396

## Description

### Technical Field

The present invention relates to operation of wind farms, and in particular to control of wind turbines in air flow fields across a wind farm.

### Background Art

Wind turbine placement, is an important topic when designing a wind farm. Current processes for designing wind farms are focussed on maximising power capture on a given site and minimising losses in power capture due to turbine wakes affecting other turbines. The influence of the terrain, and atmospheric stability, and the consequence of resulting wind quality on turbine loads is an aspect that is not well understood, and does not really get considered in the design of wind farms.

Turbine loads for a farm are calculated in the turbine design process based on site wind classes. However, the wind classes do not capture any site specific loadings that can arise from the terrain.

On real wind farms site dependent loads have resulted in high component failure rates on turbines in the farm. Better understanding of site dependent loads, their cause, and how to manage them could provide key advantages in improving operational costs on wind farms, by reducing downtime due to failure.

The present invention allows understanding of the farm level flow field that arises as a consequence of terrain. This can then be used to determine the site dependent loads that arise on the turbines as a consequence of the farm level flow field structures.

At present turbine loads can only be measured by attaching strain gauges to the turbines, (usually on the main shaft and or on the blades). This method of loads measurement is very expensive, as it is highly labour intensive. The expense is such that when loads measurement campaigns are done only one or two turbines from a site will be instrumented.

However, on a real wind farm because of terrain and other influences all the turbines will be experiencing different loads in response to the wind measured at the met mast, and some of the turbines experience very adverse conditions, while others experience more benign conditions. At present there is no easy way to calculate the specific loads resulting at each turbine a wind farm arising as a consequence of terrain and other influences.

The combination of the terrain, the external wind boundary conditions on a wind farm, and the wake effects of the turbines in the farm all together give rise to a global wind farm flow field or flow structure (the 3D distribution of wind speed and direction in the air flowing through the wind farm). This global wind farm flow field will have persistent flow structures (patterns in velocity distributions, such as wakes and eddies) that are present resulting from terrain. For example, if turbines are placed behind a large hill which is upstream of the oncoming prevailing wind, these turbines will most be in the wake of the hill. The hill wake is an example of a farm level flow structure. The current invention allows farm level flow structures to be understood from existing sensors fitted to wind turbines.

All turbines are fitted with anemometers, such that they can perceive local average wind speed and wind direction, so that the control system can align the yaw angle of the turbine.

The anemometer on its own provides a point measure of wind speed and direction that the turbine hub height. However, this on its own does not tell the full story in terms of the quality of the wind over the rotor blades. Ideally the wind flow over the blades would be coherent and uniform. However, in real flows asymmetry can arise due to other flow influences, resulting in a lower quality flower over the blades that is less uniform. It can also be varying in time at different rates. Characteristics of good flow quality and poor flow quality over the blades are below (these apply at any wind speed).

High quality wind flow is characterised by uniform velocity experienced over the disc swept by the rotor blades, and by the wind flow being "steady", staying constant with time.

Poor quality wind flow is characterised by an asymmetric velocity distribution over the disc swept by the rotor blades, and by the wind flow being "gusty", the distribution changing with time.

The anemometer indicates the local flow speed at hub height, not the flow quality over the blades. A poor flow quality can greatly increase loads onto the turbine, increasing the damage on turbine components.

Understanding of global flow 3D field structures in the wind farm allows the flow quality at the specific points where turbines are located to be determined more accurately. From the wind quality data an improved estimate of turbine location specific loads can be determined.

US2013/0320676A1 and EP2169218A3 disclose methods for correcting the wind velocity measured at a nacelle using a wind velocity measured at a reference point. Neither approach discloses estimation of loads.

### Disclosure of Invention

The current invention is a method by which the farm flow field (and hence local loads increases) can be computed from existing turbine sensors without the need for any additional measurement. The invention is novel in that thinking at a turbine level, the data per turbine on from fitted sensors is not sufficient to compute the flow field and loads increases. However, taking data collectively from all turbine sensors within the farm allows deep insight to be derived, and can be sufficient to compute the global farm flow fields and local loads increases.

According to the present invention, a method for controlling wind turbines in a wind farm is disclosed. It is also a method for extending (or reducing) life of a wind turbine, altering performance (increased Annual Energy Production, AEP) (operational) or reducing cost through structural material reduction (design). The method comprises the steps of: providing wind velocity data from wind sensors mounted on the wind turbines, the velocity data comprising wind speed and wind direction; providing wind velocity data from one or more reference sensors, the velocity data comprising wind speed and wind direction; binning the wind data according to wind speed and wind direction; identifying wind turbines in which the velocity data deviates from the reference; calculating local loads increases acting on the wind turbines where the velocity data deviates from the reference; using the local loads increases to modify a control strategy of a turbine control system of the identified wind turbines to achieve one or more of: extending a life of a wind turbine, increasing annual energy production, reducing operating cost through structural material reduction, or revising a maintenance strategy to extend a life of a wind turbine. For example, the following can be achieved: extending (or reducing) life of a wind turbine, altering performance (increased AEP) (operational) or reducing cost through structural material reduction (design).

### Brief Description of Drawings

The present invention will now be described, by way of example only, with references to the accompanying drawings, in which:
Figure 1 shows a diagrammatic representation of local wind inflow in a perfect wind farm;
Figure 2 shows a diagrammatic representation of local wind inflow in a typical wind farm, where local inflow vectors are influenced by terrain, and flow phenomena in the farm;
Figure 3 shows plots of turbine anemometer data binned by direction and wind speed, (10m/s data-set shown, directional bins 0 - 360);
Figure 4 shows wind speed deviation plots (anemometer deviation from met mast by direction, directional bins for 10m/s data-set);
Figure 5 shows a representation of terrain height data;
Figure 6 shows turbine positions in a flow domain;
Figure 7 shows terrain data for the domain shown in Figure 6;
Figure 8 shows a diagrammatic description of continuity model;
Figure 9 shows an example of a flow field in a 2D plane;
Figure 10 shows blockage variation with height;
Figures 11 and 12 show terrain wakes;
Figure 13 shows a free stream to wake interface;
Figure 14 shows an acceleration-induced flow shear; and

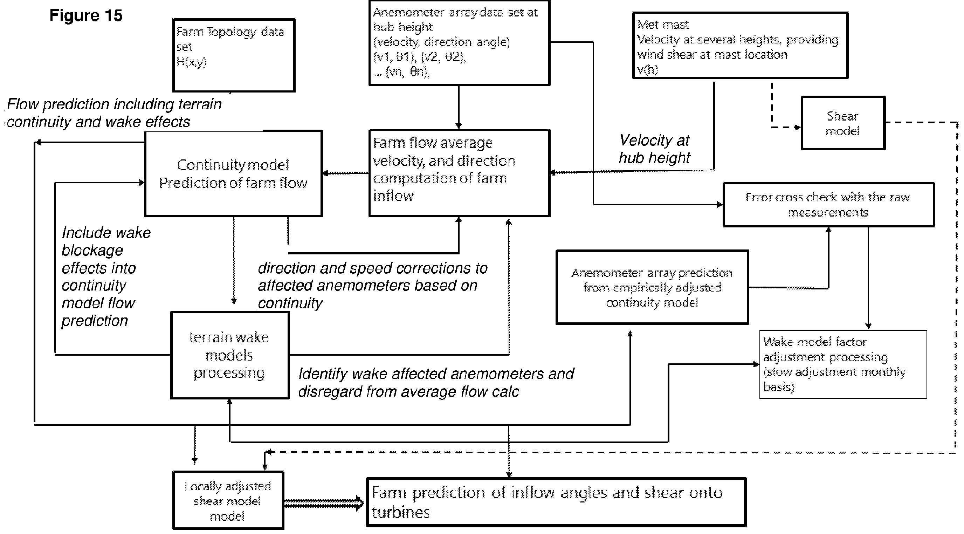

Figure 15 shows a methodology overview of an anemometer compensated empirically extended continuity model of farm flow; and
Figure 16 shows how the output of a wind turbine varies with wind speed.

### Best Mode for Carrying Out the Invention

At present all modern turbines are fitted with SCADA systems, that record and transmit data about the basic turbine performance. The data includes the power capture, generator current, component temperatures and the wind speed and direction from the turbine anemometer. It is the anemometer data from the existing SCADA system that is used in a novel way.

The concept is explained as follows:
Use of collated farm level anemometer data as a combined data set allows farm level flow structures to be determined. From these flow structures the site specific loads can be determined.

The key features to determine from the farm flow field are persistent flow structures that arise often through the year, at the same location in the farm flow field. It is persistent structures that affect loads and damage, as time under load is required for fatigue damage to take place. There will be other more transient flow structures that are harder to perceive from anemometer data, but these are less important from a fatigue loading perspective.

Examples of such flow structures could be persistent wakes, from terrain features such as hills, and forested ground. The farm flow structures could also arise from thermal influence, such as local convection induced by differences in ground and air temperature. It is in fact already well known that there are strong differences in day time and night time flow conditions arising from such phenomena.

Current methods for determining loads on individual turbines involve fitting strain gauges and data acquisition systems to each turbine. Unfortunately, this is a very expensive way of working out actual site loads. Ideally the preference would be to instrument very few turbines (or none at all after method demonstration with an operator).

The invention provides a method for defining load increases on to turbines resulting from farm level flow structures (arising from terrain, and or temperature at a sight), and it does not need strain gauges, it just uses existing on board turbine sensor data in a novel way.

At each wind farm site, the method can calculate the loads increases on to turbines as a result of the farm level flow structures (which are not accounted for in the design loads calculations). The farm level flow structures are derived from the anemometer data coming from the individual turbines within the farm. Such a methodology for loads enhancement computation would provide a much lower cost solution, compared with site specific loads determination by strain gauging of each turbine.

### Overview of the local loads enhancement computation methodology (LLECM) approach

A low cost way of determining turbine specific wind conditions, is to make use of the farm level array of measured data that can be gathered from the existing turbine sensors (turbine anemometers), to derive the large scale flow structures in the farm flow-field, then use those flow structures to derive the 3D velocity field of flow structures across the farm.

Anemometers on their own, allow a measurement of air speed at hub height. On its own the anemometer can give very little insight into wind shear. Wind shear can be a big contributor to producing non-torque moments in the turbine rotor; that can be damaging to the rotor, main bearing, and tower (and also in some case the gearbox).

While a single anemometer reading is of little value in measuring wind shear, the combined measurements of an array of that data for all turbines in the farm, can be of great use.

The present invention makes use of arrayed turbine anemometer data to derive 3D farm flow structures, for the purposes of finding the local 3D flow field around the turbines, and from this local turbine loads increases can be computed.

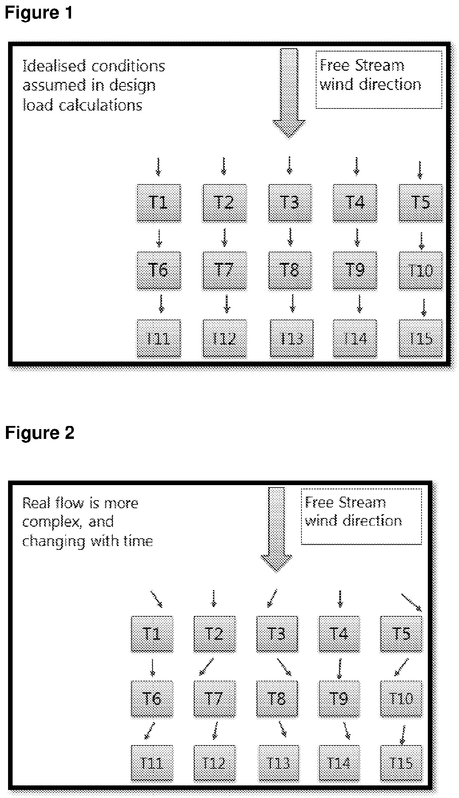

In Figure 1, all turbines perceive the same wind class.

The farm has a wind class, but local flow at turbine locations has unique properties based on local terrain and/or climatic/thermal features. These are not accounted for in the wind class, and as a result some turbines experience higher loads locally, than they are designed for based on the wind class. This can result in early turbine failure.

The ability to calculate the local loads increases would be beneficial because it allows interventions to be made to prolong turbine life. These interventions can be either maintenance activities (such as more efficient scheduling of replacement components and or preventative maintenance activities such as bearing grease flushing to prolong bearing life), or they can be control activities, such as derating the turbine to reduce torque, or active blade control approaches such as individual pitch control to reduce the non-torque loads. It is a prerequisite to both the maintenance activities and the turbine control activities that the local loads increases are known, this is the key benefit of the current invention, as it provides a way of knowing them.

The derived control strategy could allow reducing cost through structural material reduction in new product introduction, design revisions or after-market replacements/refurbishments.

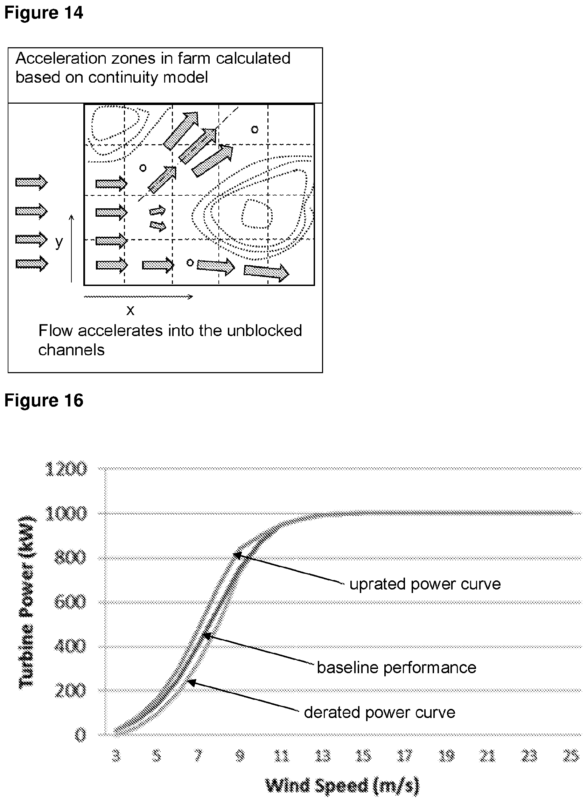

By using topology effects (or flow structures), the turbine control system will adapt the machines operational boundaries through intelligent blade pitching strategies and effectively shifting the generating power curve (see Figure 16). This will increase the AEP by increasing the area under the curve at comparable wind speeds. Figure 16, shows a baseline power generating curve. If topology effects are favourable, the interactive control system would adjust the turbine to follow the corresponding curve (for example) that ultimately increases the AEP. Should topology conditions be less favourable, the controls system could de-rate the machine, making the turbine follow the corresponding line (for example) for benefit of maintaining or extending life, or maintenance scheduling.

Using adaptive control strategy (ACE), topology effects will be a direct I/O to the supervisory control system and the strategy will allow the machine to alter the pitching regime and generate more power at lower measured wind speeds.

### Outline of the LLECM approach (basic form using only the farm anemometer data set)

The process outlined in steps 1-4 below is referred to as the Local Loads Enhancement Computation Methodology (LLECM).

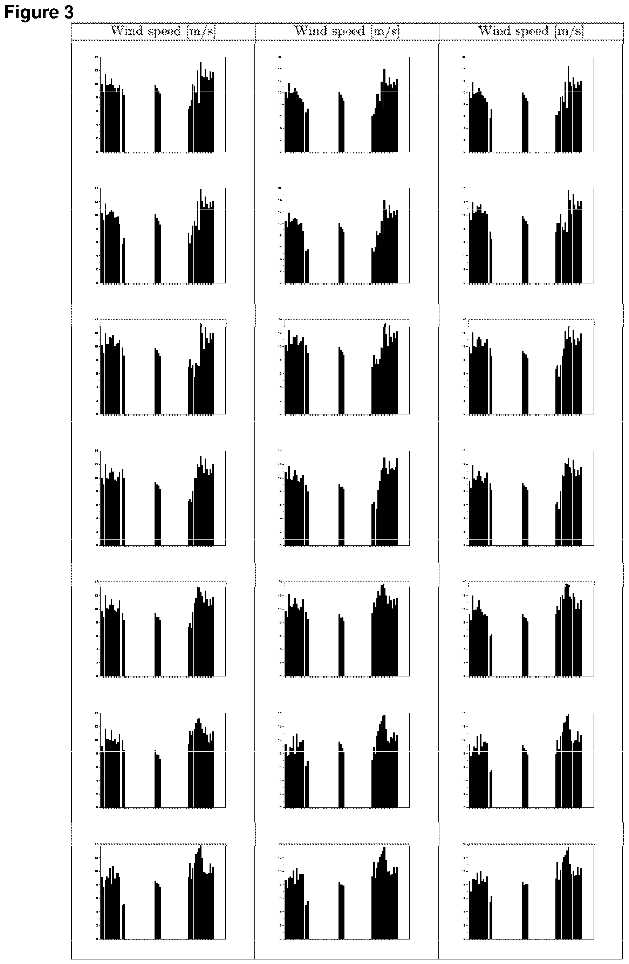

Step 1: Identify reference turbine anemometer and/or reference site met mast, known to be located in a flatter portion of the site away from severe terrain features; Step 2: Take the full farm anemometer data set from the SCADA system, bin the data by direction and by wind speed. (An example of such binned data is shown in Figure 3);

Step 3: For each turbine compute by direction and by wind speed bins of the deviation in local wind speed to the reference anemometer identified in step 1; and Step 4: Turbines with low deviation bins computed in step 3 will have loads equivalent to the site wind class, loads with higher deviation will be experiencing loads different to those that correspond to the site wind class. Compute loads increases by assuming deviation is always worse, and loads increase scales in direct proportion to the magnitude of the computed deviation in step 3.

Figure 3 shows an example of the data computed in step 2. On these anemometer data plots all turbines seem to be seeing the same wind conditions. The data computed in step 2, is not that revealing when processed only to this level.

When plotted as deviation from clean met mast (a clean met-mast is a colloquial description of a met mast not in strong terrain influence), local terrain influences show up in the turbine anemometer data as bigger deltas from the met mast. In these plots turbines are located along a ridge, flow along the valley causes lower turbulence and lower deviation between the turbine anemometer and the met mast. Flow across the valley (in either direction causes more turbulence, and hence bigger deviations). Some directions have no appreciable wind at 10 m/s and show up as the gaps in the wind speed and wind speed to met-mast deviation plots

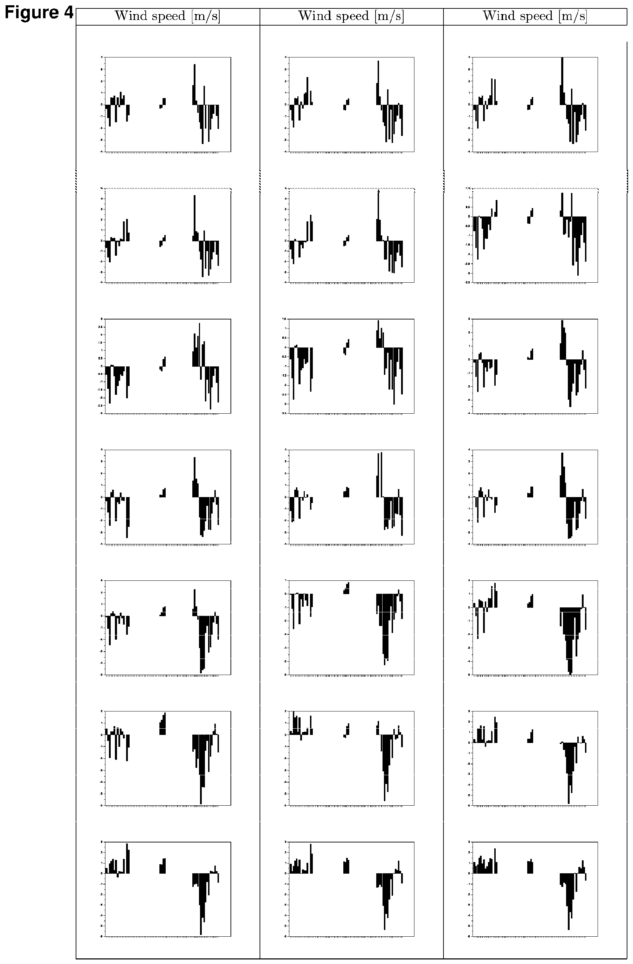

In Figure 4, higher loads would be experienced when wind direction is between 0 and 60 degrees, and again when the direction is between 280 and 360. Loads are lower between 170 and 200 degrees. Some directions do not have wind at 10 m/s for any appreciable time, these present as empty bins, and appear as gaps on the plots

The local loads computation methodology (LLECM outlined above) gives two main advantages over alternative approaches to investigating terrain and wind shear influenced loads. Firstly, it does not require any new sensors to be fitted to the turbines. The methodology makes use of existing data sets in a novel way to establish the local loads increases. Secondly, the approach is not very computationally intensive, which is its advantage over more traditional based approaches, that attempt to compute the loads from global simulation of the whole wind farm using Computational Fluid Dynamics Approaches, such as those outlined in NREL SOFWA 2012.

### Extensions to the LLECM methodology using additional data sets

The accuracy of local turbine loads increases computed from the basic method described in section Error! Reference source not found., can be enhanced by using the SCADA anemometer data in conjunction with other data sets, such as site terrain data.

The real cause of local site flow variation, is often the influence of the site terrain. As such if terrain topology data is available, calculations based on this data set can be used to enhance basic calculation methodology described in section Error! Reference source not found.

In the basic methodology the loads increases are assumed to relate in direct proportion to the computed anemometer deviation bins. This will not always be the case. More detailed calculations can be made using the terrain data to get a more accurate prediction of the local flow structures by the turbines, and as such the resulting local loads increases.

### Continuity model of global terrain influence

One of the most simplistic ways the terrain data set can be used to enhance the local loads computation method described in Error! Reference source not found. is to use it with a continuity model to compute in a crude way, the influence of terrain on the global and local farm wind flow speeds and wind directions. The continuity model input data is that from the reference anemometer. The outputs from the continuity model (local turbine predictions of flow direction and flow speed), can be used to compute additional deviation metrics (akin to those in step 3 of the method in section Error! Reference source not found.). These quantities can yield further insight into the direction and magnitude of local loads adjustments, and can be used to improve the loads prediction accuracy.

The continuity model approach is described as follows:
The starting point of the calculations involves the use of a continuity model for flow as influenced by terrain. This type of model is well known, very cheap compared to higher fidelity approaches such as Computational Fluid Dynamics (CFD) approaches using a finite volume method with a Reynolds Averaged Navier Stokes (RANS) code, and a turbulence model. The continuity approach is simply a statement that the volume flow rate of air entering the domain, must equal the amount leaving the domain (air is not being compressed and stored in the domain to any significant extent).

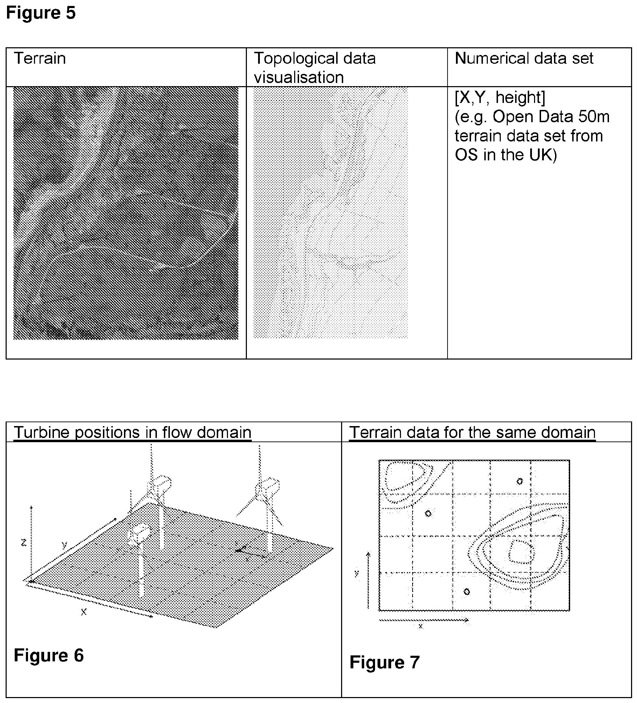

The key input to the topology model is the terrain height data, as this is used to compute terrain blockage shown in Figure 5. The area of study is defined as is shown diagrammatically in Figure 5 by the grey plane. This plane represents the base of a cube of air, in which the flow structures are derived based on the anemometer data and terrain data.

The area of study is subdivided into a grid, (also shown in Figure 5). In a 3D sense the farm air flow domain is represented by a set of cubes. Terrain topology is used to quantify available flow area in each cube of the domain. Flat terrain at the base of a cube means that the full area of the cube is available. If the cube is half filled with terrain, only half the area is available. To satisfy continuity volume flow rates in and out of the domain must, balance, and this can be used to compute approximate free stream velocities, in other parts of the flow domain. The idea is show diagrammatically in Figure 7.

The continuity model can be used to give predictions in the free stream of velocity increases as a result of terrain influence, as well as, in a limited way background shear, by taking successive 2D slices at different heights, and looking at the blockage from the terrain at the different height levels.

### Extended continuity model by coupling to empirical models of viscous flow phenomena (Augmented Continuity Model)

There however some significant limitations of a continuity model. None of the viscous fluid effects are captured, no boundary layers, wakes, or turbulent structures can be predicted. All of these features would also arise in the real flow domain, leading to a flow field that is a superposition of the continuity, and viscous features. The model also has no way of accounting for incoming flow-turbulence entering the domain.

The conventional solution is CFD using a RANS code. This approach solves the viscous features of the flow, and provide a way of addressing the limitations of a continuity model, but the approach is extremely computationally expensive, (particularly if a resolution appropriate to resolving length scales in the fluid flow relevant for blade loads on the wind turbine in a farm is desired).

An innovative alternative to full CFD is described as follows, it involves coupling the continuity model to empirical models to provide predictions of viscous flow phenomena such as local terrain and turbine induced turbulence.

It is common practice in product development to couple simple physics based models (such as the continuity model described above) with empirical data of component a component measured performance. The resulting empirical model that gets derived is valid only for that specific application (as not fully physics based), but nevertheless for that application can provide very rapid high accuracy answers for a complex problem. For example, an empirical turbine rotor model can be achieved by measuring performance in the wind tunnel, and logging the data. Once the empirical curve is derived subsequent computations of power at wind speed are extremely low computational cost. There is no need to create CFD model to find the power curve if you have a wind tunnel characteristic for the rotor power curve.

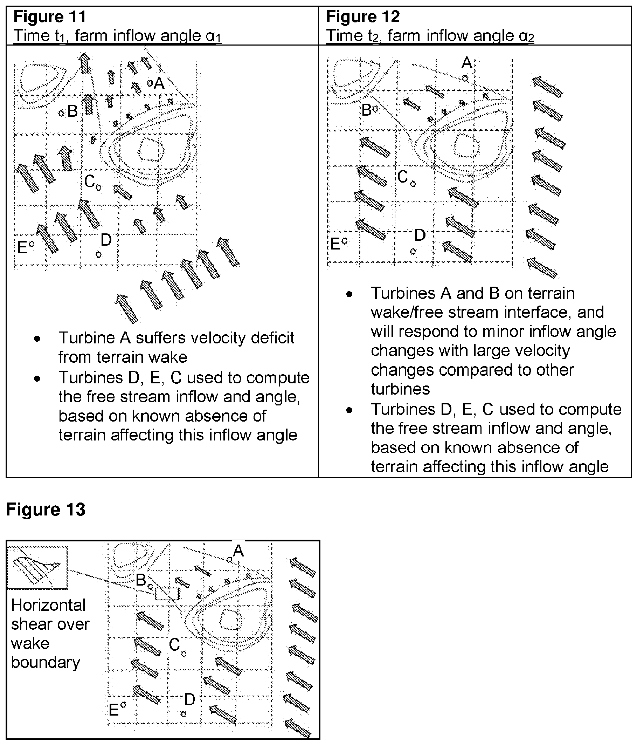

In a similar way the array of farm anemometer measurements can be used to create empirical sub-models of the flow behaviour, specific to the given farm, that augment the continuity model, such that the overall model is able to make high fidelity predictions of the flow field at low computational cost. There are several components to the process, each relating to specific flow structures resulting from terrain features, this is outlined below, Figures 11 to 13:
Empirical terrain sub-models
1) Terrain wake (Figure 11)
2) Free-stream to terrain wake interface (Figure 12)
3) Acceleration induced flow shear model (Figure 13)

Referring to Figures 11 and 12, knowledge of the terrain, and statistical tracking of the various farm anemometers over time for variable inflow angle and speed, allows (over times a map of the terrain influence to be developed), which can be used to augment the predictions of the continuity model, as the wakes themselves are form of blockage like the terrain.

Referring to Figure 13, in response to changes over time, in farm inflow angle, and flow speed the boundary of the terrain wake will migrate, allowing models of velocity profile across the interface to be established, these can further augment the continuity flow model of the farm. Measurements against time can also provide information about the vertical flow shear flow.

One of the key factors influencing turbine loads is the vertical shear (the change in wind speed with height). Differences in velocity with height over the length of the turbine blades introduce damaging moment loads, that can affect blades, bearings, and the tower. Improving local predictions of shear is an important aspect. The baseline shear, can be measured at the farm met mast (it has sensors at different heights), however, for improved predictions of loads on the turbines, how the shear profile is modified by terrain, is important factor. As was mentioned earlier, it is partly adjusted by continuity effects (change in blockage with height), but there are important other effects, related to the ground boundary layer, and the change in velocity profile with wind speed

The anemometers will record a time history of velocity against farm inflow, deviations to the measured velocity compared to what would be expected from the met mast measurements allow empirical models of the terrain influence on shear to be created

Gusts at the met mass allow modelling of the acceleration influence on the shear profile. This acceleration influence can be applied in the farm domain, at points in the flow field known to be accelerating from the continuity model predictions.

### Enhancement via Computational Fluid Dynamics (CFD) model of terrain influence

The local influence of terrain in terms of its consequence on turbine loads can also be computed using CFD models. In this approach global farm flow field, and local flow field near the turbines are computed. The local flow field information can be used in conjunction with Blade Element Momentum (BEM) codes to compute the rotor loads associated with the local flow near the turbines. This is another way of augmenting the LLECM approach.

### Enhancement via analytics of site failure rate data

The local influence of terrain in terms of its consequence on modifying turbine failure rates can also be established via detailed study of wind farm failure rate data and relating it to site terrain levels. Sites with more severe terrain tend to have high component failure rates. Detailed study on large data sets of specific locations of failed turbines in relation to local terrain features can be used to augment the LLECM approach.

### Overview of LLECM approach enhanced by augmented continuity model

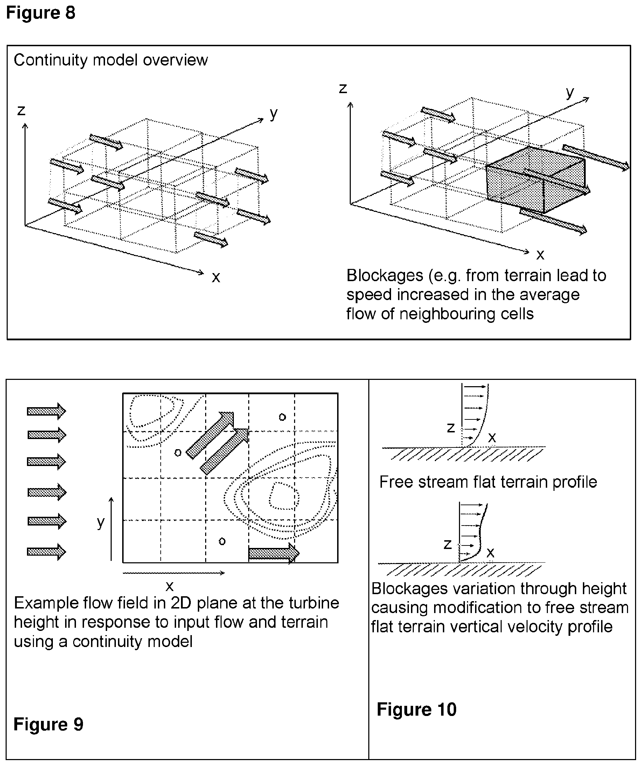

A flow chart of the LLECM approach extended by and augmented continuity model is shown schematically in Figure 10

### LLECM additional considerations

The increased rotor loads that give rise to increased turbine damage typically arise as a consequence of the fact that there are asymmetries in the flow presented to the turbine rotor. This can be because of turbine yaw errors and also terrain influenced causing turbulent flow, and also the natural wind shear formed from the fact that flow close to the ground is slower, and that the turbine rotor is operating in the ground boundary layer.

Detailed direct computation of rotor loads from the local wind inflow conditions can be done with a variety of computational methods, commonly BEM codes are used, but other methods such as lifting line vortex models, and actuator line models are also used. Less common because of computational intensity, but also possible is the use of CFD directly on the turbine rotor.

Indirect computation of these loads is done by means of scaling loads calculated for the site wind class based on local amplification metrics. An example of this is the assumption of load scaling directly correlating to anemometer deviation data which is the approach outlined above.

This approach requires the use of a reference wind sensor, which can either be a met-mast or a wind turbine anemometer. In the ideal case, this reference sensor is not strongly influenced by local terrain, and is representative of the full site. In circumstances where this is not possible the reference sensor can be virtual, and is constructed statistically from the full array of site wind measurement sensors. An example of this approach would be to compute the average wind speed and average wind direction from all site sensors. More complex approaches would involve using subsets and or weighting to give stronger value to sensors in milder terrain for circumstances where the farm terrain data set is available.

In broad terms, the present invention involves identifying an anemometer or met mast not influenced by terrain (the reference sensor). Next, bins of local turbine anemometer deviation to the reference sensor are calculated. Deviation will nearly always mean the loads are worse (increased / enhanced). In the simplest approach, site loads are scaled by a factor based on the size of the local anemometer deviation. In other cases, the deviation is more complex, and this can be figured out using CFD or methods that do nearly the same thing as CFD. CFD of itself does not actually give you the loads just the flow so BEM code (or other methods) to get loads in the enhanced methods (alternative to simply scaling site loads is to calculate them properly).

The present invention also provides a computer readable product for controlling wind turbines in a wind farm, the product comprising code means for implementing the steps of the methods disclosed above.

The present invention also provides a control system for controlling wind turbines in a wind farm configured to execute the steps according to any of the approaches described above.

## Claims

1. A method for controlling wind turbines in a wind farm, the method comprising the steps of:
providing wind velocity data from wind sensors mounted on the wind turbines,
the velocity data comprising wind speed and wind direction;
providing wind velocity data from one or more reference sensors, the velocity data comprising wind speed and wind direction;
binning the wind data according to wind speed and wind direction;
identifying wind turbines in which the velocity data deviates from the reference; **characterized by**
calculating local loads increases acting on the wind turbines where the velocity data deviates from the reference; and
using the local loads increases to modify a control strategy of a turbine control system of the identified wind turbines to achieve one or more of: extending a life of a wind turbine, increasing annual energy production; reducing operating cost through structural material reduction; or revising a maintenance strategy to extend a life of a wind turbine.

2. A method according to claim 1, in which the step of modifying a control strategy of a turbine control system of the identified wind turbines comprises intelligent blade pitching strategies.

3. A method according to claim 1 or claim 2, further comprising the step of collating wind sensor data from wind sensors mounted on the wind turbines and determining a farm level flow structure and calculating local loads increases incident on the turbines that are not measured by the wind sensors.

4. A method according to claim 1, in which one or more force and/or moment and/or strain measurements is used to calculate local loads increases incident on the turbines that are not measured by the wind sensors.

5. A method according to claim 1, in which historical operational data is used to calculate local loads increases incident on the turbines that are not measured by the wind sensors.

6. A method according to claim 1, further comprising the step of providing a continuity model to take account of terrain influence on loads incident on the turbines.

7. A method according to claim 1, further comprising the step of providing an augmented continuity model to take account of terrain influence on loads incident on the turbines.

8. A method according to claim 1, further comprising the step of providing a CFD model to take account of terrain influence on loads incident on the turbines.

9. A method according to claim 1, further comprising the step of providing a CFD model to take account of terrain influence on loads incident on the turbines, and further providing a BEM code for the purpose of improved local rotor loads computation.

10. A method according to any of claims 6 to 9, further comprising the step of providing wind farm failure rate data sets categorized by terrain influence.

11. A method according to any preceding claim, in which the reference wind sensor is virtual and computed from one or more turbine anemometers and or site met masts.

12. A method according to claim 1, in which the step of calculating local loads increases further comprises calculating local wind shear and/or turbulence and/or gusts and/or local changes in wind speed.

13. The method of claim 1, in which calculating local loads increases acting on the wind turbines where the velocity data deviates from the reference comprises scaling the site loads by a number based on the size of anemometer deviation.

14. A computer readable product for controlling wind turbines in a wind farm, the product comprising code which, when executed by a computer, cause the computer to carry out the steps of the method according to any of the preceding claims.

15. A computer system for controlling wind turbines in a wind farm, the system comprising means designed for implementing the steps of the method according to any of claims 1 to 13.

## Patentansprüche

1. Verfahren zum Steuern von Windturbinen in einem Windpark, wobei das Verfahren die folgenden Schritte umfasst:
Bereitstellen von Windgeschwindigkeitsdaten von an den Windturbinen montierten Windsensoren, wobei die Windgeschwindigkeitsdaten eine Windstärke und Windrichtung umfassen;
Bereitstellen von Windgeschwindigkeitsdaten von einem oder mehreren Referenzsensoren, wobei die Windgeschwindigkeitsdaten eine Windstärke und Windrichtung umfassen;
Klasseneinteilung der Winddaten nach Windstärke und Windrichtung;
Identifizieren von Windturbinen, bei denen die Windgeschwindigkeitsdaten von der Referenz abweichen;
**gekennzeichnet durch**
Berechnen von Erhöhungen lokaler Lasten, die auf die Windturbinen wirken, wenn die Windgeschwindigkeitsdaten von der Referenz abweichen; und
Verwenden der Erhöhungen lokaler Lasten, um eine Steuerstrategie eines Turbinensteuersystems der identifizierten Windturbinen zu modifizieren, um eines oder mehrere von Folgendem zu erzielen: Verlängern einer Lebensdauer einer Windturbine;
Erhöhen einer jährlichen Energieerzeugung; Verringern von Betriebskosten durch Verringerung von Konstruktionsmaterial; oder Überarbeiten einer Wartungsstrategie, um eine Lebensdauer einer Windturbine zu verlängern.

2. Verfahren nach Anspruch 1, in dem der Schritt des Modifizierens einer Steuerstrategie eines Turbinensteuersystems der identifizierten Windturbinen intelligente Blatteinstellstrategien umfasst.

3. Verfahren nach Anspruch 1 oder Anspruch 2, das ferner den Schritt eines Kollationierens von Windsensordaten von Windsensoren, die an den Windturbinen montiert sind, und eines Bestimmens einer Strömungsstruktur auf Windparkebene und eines Berechnens von Erhöhungen lokaler Lasten, die auf die Turbinen treffen und nicht von den Windsensoren gemessen werden.

4. Verfahren nach Anspruch 1, in dem eine oder mehrere Kraft-, Moment- und/oder Spannungsmessungen verwendet werden, um Erhöhungen lokaler Lasten, die auf die Turbinen treffen und nicht von den Windsensoren gemessen werden, zu berechnen.

5. Verfahren nach Anspruch 1, in dem Verlaufsbetriebsdaten verwendet werden, um Erhöhungen lokaler Lasten, die auf die Turbinen treffen und nicht von den Windsensoren gemessen werden, zu berechnen.

6. Verfahren nach Anspruch 1, das ferner den Schritt eines Bereitstellens eines Kontinuumsmodells umfasst, um einen Geländeeinfluss auf Lasten, die auf die Turbinen treffen, zu berücksichtigen.

7. Verfahren nach Anspruch 1, das ferner den Schritt eines Bereitstellens eines erweiterten Kontinuumsmodells umfasst, um einen Geländeeinfluss auf Lasten, die auf die Turbinen treffen, zu berücksichtigen.

8. Verfahren nach Anspruch 1, das ferner den Schritt eines Bereitstellens eines CFD-Modells umfasst, um einen Geländeeinfluss auf Lasten, die auf die Turbinen treffen, zu berücksichtigen.

9. Verfahren nach Anspruch 1, das ferner den Schritt eines Bereitstellens eines CFD-Modells umfasst, um einen Geländeeinfluss auf Lasten, die auf die Turbinen treffen, zu berücksichtigen, und ferner eines Bereitstellens eines BEM-Codes zum Zweck einer verbesserten Berechnung lokaler Rotorlasten.

10. Verfahren nach einem der Ansprüche 6 bis 9, das ferner den Schritt eines Bereitstellens von Windparkausfallratendatensätzen, die nach Geländeeinfluss kategorisiert sind, umfasst.

11. Verfahren nach einem der vorhergehenden Ansprüche, in dem der Referenzwindsensor virtuell ist und von einem oder mehreren Turbinenanemometern und/oder Meterologiemasten am Standort berechnet wird.

12. Verfahren nach Anspruch 1, in dem der Schritt eines Berechnens von Erhöhungen lokaler Lasten ferner ein Berechnen lokaler Windscherung und/oder Turbulenzen und/oder Böen und/oder lokaler Veränderungen der Windgeschwindigkeit umfasst.

13. Verfahren nach Anspruch 1, in dem das Berechnen von Erhöhungen lokaler Lasten, die auf die Windturbinen wirken, wenn die Windgeschwindigkeitsdaten von der Referenz abweichen, ein Skalieren der Lasten am Standort durch eine Zahl auf Grundlage der Größe der Anemometerabweichung umfasst.

14. Computerlesbares Produkt zum Steuern von Windturbinen in einem Windpark, wobei das Produkt Code umfasst, der bei Ausführung durch einen Computer den Computer dazu veranlasst, die Schritte des Verfahrens nach einem der vorhergehenden Ansprüche auszuführen.

15. Computersystem zum Steuern von Windturbinen in einem Windpark, wobei das System Mittel umfasst, die zum Umsetzen der Schritte des Verfahrens nach einem der Ansprüche 1 bis 13 ausgestaltet sind.

## Revendications

1. Procédé pour commander des turbines éoliennes dans un parc éolien, le procédé comprenant les étapes consistant à :
fournir des données de vélocité du vent provenant de capteurs de vent montés sur les turbines éoliennes, les données de vélocité comprenant la vitesse du vent et la direction du vent ;
fournir des données de vélocité du vent provenant d'un ou plusieurs capteurs de référence, les données de vélocité comprenant la vitesse du vent et la direction du vent ;
classer les données de vent en fonction de la vitesse du vent et de la direction du vent ;
identifier les turbines éoliennes pour lesquelles les données de vélocité s'écartent de la référence ;
**caractérisé par** les étapes consistant à :
calculer des augmentations de charges locales agissant sur les turbines éoliennes où les données de vélocité s'écartent de la référence ; et
utiliser les augmentations de charges locales pour modifier une stratégie de commande d'un système de commande de turbine des turbines éoliennes identifiées pour réaliser une ou plusieurs des opérations suivantes : étendre la durée de vie d'une turbine éolienne, augmenter la production annuelle d'énergie, réduire les coûts d'exploitation par réduction des matériaux structurels ou réviser une stratégie de maintenance pour étendre la durée de vie d'une turbine éolienne.

2. Procédé selon la revendication 1, dans lequel l'étape consistant à modifier une stratégie de commande d'un système de commande de turbine des turbines éoliennes identifiées comprend des stratégies intelligentes de réglage du pas des pales.

3. Procédé selon la revendication 1 ou la revendication 2, comprenant en outre l'étape consistant à collationner les données de capteurs de vent provenant de capteurs de vent montés sur les turbines éoliennes et à déterminer une structure d'écoulement au niveau du parc et calculer les augmentations de charges locales incidentes sur les turbines qui ne sont pas mesurées par les capteurs de vent.

4. Procédé selon la revendication 1, dans lequel une ou plusieurs mesures de force et/ou de moment et/ou de contrainte sont utilisées pour calculer les augmentations de charges locales incidentes sur les turbines qui ne sont pas mesurées par les capteurs de vent.

5. Procédé selon la revendication 1, dans lequel des données opérationnelles historiques sont utilisées pour calculer les augmentations de charges locales incidentes sur les turbines qui ne sont pas mesurées par les capteurs de vent.

6. Procédé selon la revendication 1, comprenant en outre l'étape consistant à fournir un modèle de continuité pour prendre en compte l'influence du terrain sur les charges incidentes sur les turbines.

7. Procédé selon la revendication 1, comprenant en outre l'étape consistant à fournir un modèle de continuité augmenté pour prendre en compte l'influence du terrain sur les charges incidentes sur les turbines.

8. Procédé selon la revendication 1, comprenant en outre l'étape consistant à fournir un modèle CFD pour prendre en compte l'influence du terrain sur les charges incidentes sur les turbines.

9. Procédé selon la revendication 1, comprenant en outre l'étape consistant à fournir un modèle CFD pour prendre en compte l'influence du terrain sur les charges incidentes sur les turbines et à fournir en outre un code BEM dans le but d'améliorer le calcul des charges locales de rotor.

10. Procédé selon l'une quelconque des revendications 6 à 9, comprenant en outre l'étape consistant à fournir des ensembles de données de taux de défaillance de parcs éoliens catégorisés par l'influence du terrain.

11. Procédé selon l'une quelconque des revendications précédentes, dans lequel le capteur de vent de référence est virtuel et calculé à partir d'un ou plusieurs anémomètres de turbine et/ou mâts météo de site.

12. Procédé selon la revendication 1, dans lequel l'étape consistant à calculer les augmentations de charges locales comprend en outre le calcul du cisaillement du vent local et/ou de la turbulence et/ou des rafales et/ou des changements locaux de la vitesse du vent.

13. Procédé selon la revendication 1, dans lequel l'étape consistant à calculer les augmentations de charges locales agissant sur les turbines éoliennes où les données de vélocité s'écartent de la référence comprend la mise à l'échelle des charges de site par un nombre basé sur la taille de l'écart des anémomètres.

14. Produit lisible par ordinateur pour commander des turbines éoliennes dans un parc éolien, le produit comprenant un code qui, lorsqu'il est exécuté par un ordinateur, amène l'ordinateur à appliquer les étapes du procédé selon l'une quelconque des revendications précédentes.

15. Système informatique pour commander des turbines éoliennes dans un parc éolien, le système comprenant des moyens conçus pour mettre en œuvre les étapes du procédé selon l'une quelconque des revendications 1 à 13.
